# EUROPEAN PATENT APPLICATION

(11) **EP 3 943 673 A1**
(43) Date of publication of application: **26.01.2022**
(21) Application number: 21186988.8
(22) Date of filing: 21.07.2021
(51) Int. Cl.: E02F 9/16, B62D 33/063

(54) **CONSTRUCTION MACHINERY**

(30) Priority: 21.07.2020 KR 20200089996
(71) Applicant: Hyundai Doosan Infracore Co., Ltd., Incheon (KR)
(72) Inventor: KWAK, Hongsup, 15010 Gyeonggi-do (KR)
(74) Representative: Isarpatent

(57) **Abstract**

Construction machinery according to an embodiment of the present disclosure includes: a cabin in which a user sits; a cabin elevation cylinder connected to a body of the construction machinery and moving up and down the cabin; a steering system changing a traveling direction when being operated by a user; a steering pump discharging working fluid; a steering priority valve supplying working fluid discharged by the steering pump to the steering system or the cabin elevation cylinder; a cabin elevation control valve controlling an up-operation or a down-operation of the cabin elevation cylinder by changing a movement direction of working fluid that is supplied to the cabin elevation cylinder by the steering priority valve; a solenoid valve controlling operation of the cabin elevation control valve; and a cabin elevation operation device transmitting a cabin elevation operation signal to the solenoid valve.

## Description

### FIELD OF THE DISCLOSUR

The present disclosure relates to construction machinery and, more particularly, to construction machinery having an elevatable cabin in which a user sits.

### BACKGROUND OF THE DISCLOSURE

Construction machinery means all machines that are used for civil engineering works or construction works, of used at industrial sites. In generally, construction machinery includes an engine and a hydraulic pump that is operated by power from the engine, and travels or drives various working devices using power generated by the engine and the hydraulic pump. A plurality of hydraulic pumps is used to independently drive some working devices.

Construction machinery that can elevate a cabin in which a user sits have been developed and used to secure visibility, depending on the kinds of work that the construction machinery performs.

Existing construction machinery having the function of elevating a cabin additionally employs a separate hydraulic pump to supply working fluid for elevating the cabin. However, adding a separate hydraulic pump only to elevate a cabin causes the problem that not only the manufacturing cost is increased, but the parts to be maintained is increased.

### SUMMARY

An object of the present disclosure is to provide construction machinery that can stably and efficiently elevate a cabin in which a user sits.

According to an embodiment of the present disclosure, construction machinery includes: a cabin in which a user sits; a cabin elevation cylinder connected to a body of the construction machinery and moving up and down the cabin; a steering system changing a traveling direction when being operated by a user; a steering pump discharging working fluid; a steering priority valve supplying working fluid discharged by the steering pump to the steering system or the cabin elevation cylinder; a cabin elevation control valve controlling an up-operation or a down-operation of the cabin elevation cylinder by changing a movement direction of working fluid that is supplied to the cabin elevation cylinder by the steering priority valve; a solenoid valve controlling operation of the cabin elevation control valve; and a cabin elevation operation device transmitting a cabin elevation operation signal to the solenoid valve.

The construction machinery may further include an oil tank connected with the cabin elevation control valve.

The steering priority valve may be configured to supply working fluid in priority to the steering system when the steering system 500 is operated by a user.

The construction machinery may further include: a first cabin elevation line connecting the cabin elevation control valve and a head side of the cabin elevation cylinder to each other; a second cabin elevation line connecting the cabin elevation control valve and a rod side of the cabin elevation cylinder to each other; and a lock valve installed on the first cabin elevation line.

The construction machinery may further include: an oil tank keeping working fluid; a drain line connecting the lock valve and the oil tank to each other; and an emergency-down valve installed on the drain line.

The emergency-down valve may include: an internal emergency-down valve disposed inside the cabin; and an external emergency-down valve disposed outside the cabin.

The steering system may include: a steering cylinder operated by working fluid supplied through the steering priority valve, and having a first pressure receiver and a second pressure receiver; a steering control valve disposed between the steering cylinder and the steering priority valve and selectively supplying working fluid to one of the first pressure receiver and the second pressure receiver of the steering cylinder; a steering operation device generating a steering operation signal when being operated by a user; and a steering motor switching the steering control valve in response to a steering operation signal from the steering operation device.

The steering priority valve may be configured to send working fluid toward the cabin elevation control valve when the steering operation device is not operated.

According to an embodiment of the present disclosure, the construction machinery can stably and efficiently move up and down a cabin in which a user sits.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a hydraulic circuit diagram of construction machinery according to an embodiment of the present disclosure.
FIG. 2 is a hydraulic circuit diagram of a steering system used in the construction machinery shown in FIG. 1.
FIG. 3 is a side view showing cabin-up operation of the construction machinery shown in FIG. 1.
FIG. 4 is a hydraulic circuit diagram showing the cabin-up operation of the construction machinery shown in FIG. 1.
FIG. 5 is a side view showing cabin-down operation of the construction machinery shown in FIG. 1.
FIG. 6 is a hydraulic circuit diagram showing the cabin-down operation of the construction machinery shown in FIG. 1.
FIG. 7 is a hydraulic circuit diagram showing emergency-down operation of the construction machinery shown in FIG. 1.

### DETAILED DESCRIPTION

In the following detailed description, reference is made to the accompanying drawing, which forms a part hereof. The illustrative embodiments described in the detailed description, drawing, and claims are not meant to be limiting. Other embodiments may be utilized, and other changes may be made, without departing from the spirit or scope of the subject matter presented here.

Embodiments of the present disclosure will be described in detail with reference to the accompanying drawings so that those skilled in the art can easily accomplish the present disclosure. The present disclosure can be implemented in various different ways and is not limited to the embodiments described herein.

It should be noted that the drawings are schematic and are not constructed to fit the scales. The relative dimensions and ratios of the parts shown in the figures are exaggerated and reduced for clarity and convenience and certain dimensions are only examples without limiting the parts. The same structures, components, or parts shown in two or more drawings are given the same reference numerals to show similar characteristics.

Embodiments of the present disclosure show ideal embodiments of the present disclosure in detail. Accordingly, various changes may be predicted in the diagrams. Therefore, embodiments are not limited to specific shapes in regions shown in the figures, and for example, include also changes in shape by manufacturing.

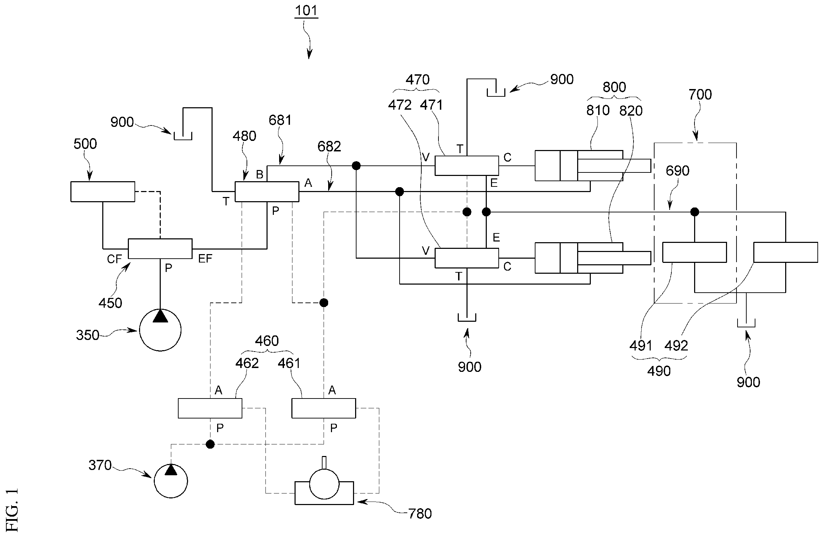

Hereafter, construction machinery 101 according to an embodiment of the present disclosure is described with reference to FIG. 1.

As shown in FIG. 1, construction machinery 101 according to an embodiment of the present disclosure includes a cabin 700, a cabin elevation cylinder 800, a steering system 500, a steering pump 350, a steering priority valve 450, and a cabin elevation control valve 480.

The construction machinery 101 according to an embodiment of the present disclosure may further include a first cabin elevation line 681, a second cabin elevation line 682, a lock valve 470, an oil tank 900, a drain line 690, an emergency-down valve 490, a pilot pump 370, a solenoid valve 460, and a cabin elevation operation device 780.

The cabin 700 is a space in which a user sits and operates various operation devices. That is, a steering operation device 530, a cabin elevation operation device 780, an internal emergency-down valve 491, etc. to be described below may be installed in the cabin 700.

The cabin elevation cylinder 800 moves up and down the cabin 700. That is, it is possible to adjust the height at which the cabin 700 is positioned by operating the cabin elevation cylinder 800. In detail the cabin elevation cylinder 800 is divided into a head side and a rod side. When working fluid is supplied into the head side and is discharged out of the head side, the cabin elevation cylinder 800 stretches and moves up the cabin 700. When working fluid is supplied into the load part and is discharged to the head side, the cabin elevation cylinder 800 contracts and moves down the cabin 700.

A plurality of cabin elevation cylinders 800 may be provided. For example, the cabin elevation cylinder 800 may include a first cabin elevation cylinder 810 and a second cabin elevation cylinder 820. By using a plurality of cabin elevation cylinders 800, as described above, it is possible not only to stably move up the cabin 700, but to use a relatively small number of cylinders, so productivity can be improved.

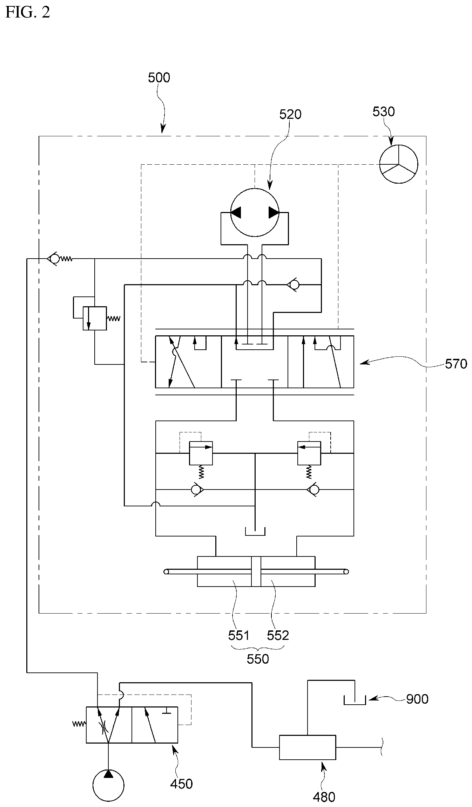

The steering system 500 is a system that is operated to change the traveling direction. The steering system 500 will be described in detail below with reference to FIG. 2.

The steering pump 350 discharges working fluid that is selectively supplied to the steering system 500 and the cabin elevation cylinder 800.

The steering priority valve 450 selectively supplies the working fluid discharged by the steering pump 350 to the steering system 500 or the cabin elevation cylinder 800. In this process, the steering priority valve 550 supplies the working fluid in priority to the steering system 500. In detail, the steering priority valve 450 supplies working fluid to the steering system 500 when the steering operation device 530 to be described below is operated, and supplies working fluid to the cabin elevation control valve 480 to be described below when the steering operation device 530 to be described below is not operated. That is, the steering priority valve 450 may be configured to supply working fluid in priority to the steering system 500 when the steering system 500 is operated by a user.

The cabin elevation control valve 480 controls the up-operation or down-operation of the cabin elevation cylinder 800 by changing the flow direction of the working fluid that is supplied to the cabin elevation cylinder 800 by the steering priority valve 450. That is, working fluid can be supplied to the head side or the rod side of the cabin elevation cylinder 800 by the changing operation of the cabin elevation control valve 480.

A first cabin elevation line 681 connects the cabin elevation control valve 480 and the head side of the cabin elevation cylinder 800 to each other.

A second cabin elevation line 682 connects the cabin elevation control valve 480 and the rod side of the cabin elevation cylinder 800 to each other.

The cabin elevation control valve 480 switches, thereby being able to supply working fluid to the head side of the cabin elevation cylinder 800 through the first cabin elevation line 681 or to supply working fluid to the rod side of the cabin elevation cylinder 800 through the second cabin elevation line 682 by switching. However, when working fluid is supplied to the head side or the rod side of the cabin elevation cylinder 800, working fluid discharged from the rod side or the head side of the cabin elevation cylinder 800 can be discharged to the oil tank 900 to be described below through the cabin elevation control valve 480 or a lock valve 470 to be described below. That is, the cabin elevation control valve 480 may be connected with the oil tank 900.

The lock valve 470 is provided to prevent a fall of the cabin 700 or leakage of working fluid. In detail, the lock valve 470 is disposed on the first cabin elevation line 681 and prevents the cabin 700 from falling due to its own weight or prevents the cabin 700 that has moved up from gradually moving down due to leakage of working fluid when the first cabin elevation line 681 is damaged.

The lock valve 470 may include a check valve that passes working fluid only to the head side of the cabin elevation cylinder 800. That is, the lock valve 470 prevents a fall of the cabin 700 by preventing working fluid from being discharged to the head side of the cabin elevation cylinder 800. The check valve disposed in the lock valve 470 can be opened in response to a control signal. As described above, since working fluid can be moved in both directions when the check valve in the lock valve 470 is opened, working fluid can be discharged to the head side of the cabin elevation cylinder 800, so the cabin 700 can be moved down.

The lock valve 470 may further include a first lock valve 471 connected with the head side of the first cabin elevation cylinder 810 and a second lock valve 472 connected with the head side of the second cabin elevation cylinder 820.

The oil tank 800 keeps working fluid and returns working fluid discharged through various valves. For example, working fluid may be discharged to the oil tank 900 through the steering priority valve 450, the cabin elevation control valve 480, the lock valve 470, and the emergency-down valve 490 to be described below.

The drain line 690 connects the lock valve 470 and the oil tank 900 to each other.

The emergency-down valve 490 is installed on the drain line 690. Accordingly, when the emergency-down valve 490 is opened, work fluid moves to the drain line 690 through the channel in the lock valve 470 and is then discharged to the oil tank 900 through the emergency-down valve 490. The emergency-down valve 490 is used to move down the cabin 700, which has been moved up, in an emergency.

In an embodiment of the present disclosure, the emergency-down valve 490 may include an internal emergency-down valve 491 installed inside the cabin 700 and an external emergency-down valve 492 installed outside the cabin 700. Accordingly, a user in the cabin 700 can operate the internal emergency-down valve 491 in an emergency. Further, when a user in the cabin 700 cannot operate the internal emergency-down valve 491 in an emergency, a worker can move down the cabin 900 by operating the external emergency-down valve 492.

The pilot pump 370 can generate pilot pressure. The pilot pressure generated by the pilot pump 370 is supplied to the cabin elevation control valve 480.

The solenoid valve 460 controls the pilot pressure generated by the pilot pump 370, thereby controlling the operation of the cabin elevation control valve 480. In detail, the solenoid valve 460 may include a first solenoid valve 461 and a second solenoid valve 462. For example, when the first solenoid valve 461 is operated, the cabin elevation control valve 480 is switched, working fluid is supplied to the head side of the cabin elevation cylinder 800. When the second solenoid valve 462 is operated, the cabin elevation control valve 480 is reversed, working fluid is supplied to the rod side of the cabin elevation cylinder 800.

The cabin elevation operation device 780 transmits a cabin elevation operation signal to the solenoid valve 460. That is, the first solenoid valve 461 or the second solenoid valve 462 controls pilot pressure in response to an operation signal from the cabin elevation operation device 780, whereby the operation of the cabin elevation control valve 480 is controlled.

Hereafter, the steering system 500 is described in detail.

As shown in FIG. 2, the steering system 500 includes a steering cylinder 550, a steering control valve 570, a steering operation device 530, and a steering motor 520.

The steering cylinder 550 is operated by working fluid supplied through the steering priority valve 450. The steering cylinder 550 has a first pressure receiver 551 and a second pressure receiver 552. For example, when working fluid flows into the first pressure receiver 551 of the steering cylinder 550, the piston of the steering cylinder 550 is moved to the right and increases the steering angle of driving wheels in one direction. Further, when working fluid flows into the second pressure receiver 552 of the steering cylinder 550, the piston of the steering cylinder 550 is moved to the left and increases the steering angle of the driving wheels in another direction.

The steering control valve 570 is disposed between the steering cylinder 550 and the steering priority valve 450 and selectively supplies working fluid to one of the first pressure receiver 551 or the second pressure receiver 552 of the steering cylinder 550. That is, working fluid supplied through the steering priority valve 45 by switching of the steering control valve 570 moves to one of the first pressure receiver 551 or the second pressure receiver 552 of the steering cylinder 550.

The steering operation device 530 generates a steering operation signal when it is operated by a user. The steering motor 520 switches the steering control valve 570 in response to a steering operation signal from the steering operation device 530.

According to this configuration, the construction machinery 101 according to an embodiment of the present disclosure can stably and efficiently moves up and down the cabin 700 in which a user sits.

That is, since the cabin 700 is moved up and down by working fluid discharged by the steering pump 350, there is no need for a separate pump for moving up and down the cabin 700.

Since the steering system 500 is not operated while the cabin 700 is moved up and down, the construction machinery 101 can be efficiently operated.

Since the steering pump 350 that usually supplies working fluid to the steering system 500 has a relatively large capacity, it is possible to improve the up-down movement speed of the cabin 700 by sufficiently supplying working fluid even though the cabin 700 is moved up and down.

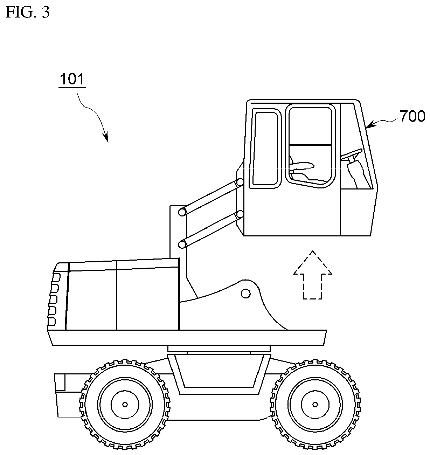

Hereafter, the operation process of the construction machinery 101 according to an embodiment of the present disclosure is described in detail with reference to FIGS. 3 to 7.

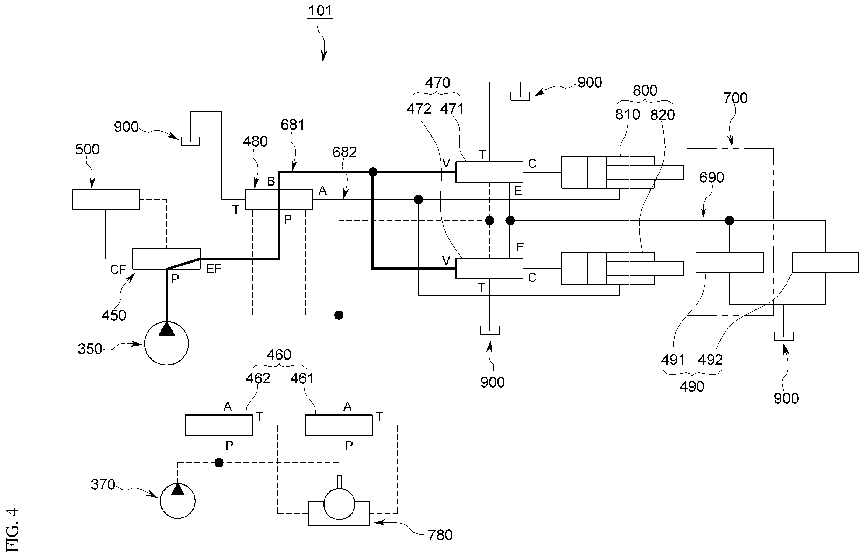

First, the cabin-up operation is described with reference to FIGS. 3 and 4.

FIG. 3 shows an up-operation of the cabin 700 of the construction machinery 101. Only the body and the cabin 700 of the construction machinery 101 are shown as an example in FIG. 3, but various working device can be added.

As shown in FIG. 4, when the cabin 700 is moved up, the steering priority valve 450 sends working fluid to the cabin elevation control valve 480. That is, the P-port and the EF-port of the steering priority valve 450 are connected to each other.

The cabin elevation control valve 480 sends the working fluid supplied from the steering priority valve 450 toward the head side of the cabin elevation cylinder 800. That is, the P-port and the B-port of the cabin elevation control valve 480 are connected to each other.

The first cabin elevation line 681 connects the B-port of the cabin elevation control valve 480 and the V-port of the lock valve 470 to each other, and the C-port of the lock valve 470 is connected with the head side of the cabin elevation cylinder 800. Accordingly, working fluid moves along the first cabin elevation line 681 and flows into the head side of the cabin elevation cylinder 800 through the lock valve 470.

When the working fluid flows into the head side of the cabin elevation cylinder 800, the cabin elevation cylinder 800 stretches and pushes up the cabin 700. In this process, the check valve in the lock valve 470 restricts the working fluid such that the working fluid can move only toward the cabin elevation cylinder 800. Accordingly, it is possible to prevent that working fluid is discharged to the head side of the cabin elevation cylinder 800 and the cabin 700 falls even if the steering pump 350, the cabin elevation control valve 480, the first cabin elevation line 681, etc. are damaged. The lock valve 470 may be attached to the head side of the cabin elevation cylinder 800 to more effectively prevent a fall of the cabin 700.

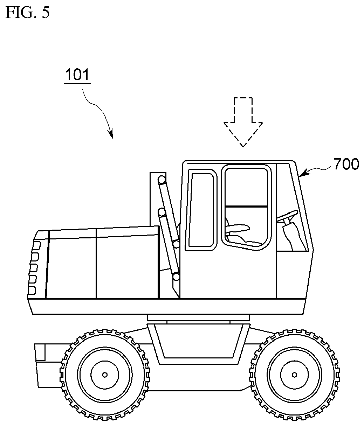

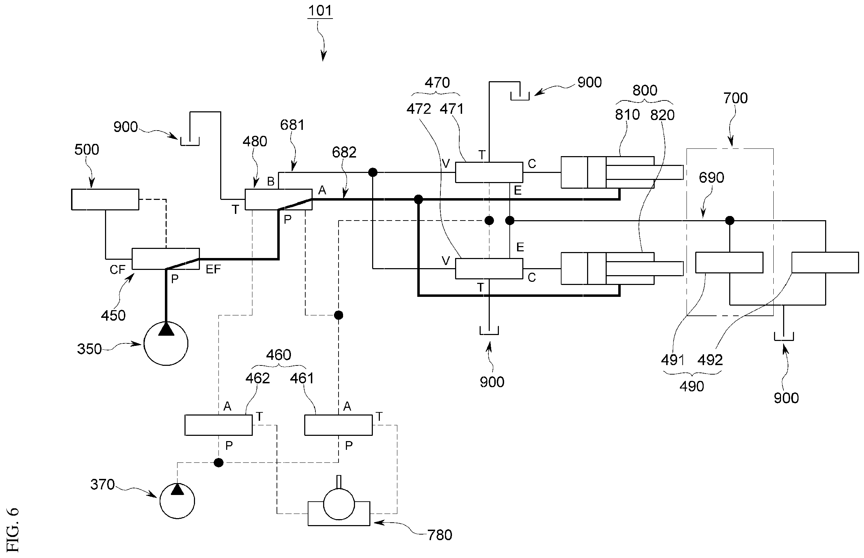

Next, the cabin-down operation is described with reference to FIGS. 5 and 6.

FIG. 5 shows a down-operation of the cabin 700 of the construction machinery 101.

As shown in FIG. 6, when the cabin 700 is moved down, the steering priority valve 450 sends working fluid to the cabin elevation control valve 480. That is, the P-port and the EF-port of the steering priority valve 450 are connected to each other.

The cabin elevation control valve 480 sends the working fluid supplied from the steering priority valve 450 toward the rod side of the cabin elevation cylinder 800. That is, the P-port and the A-port of the cabin elevation control valve 480 are connected to each other. A second cabin elevation line 682 connects the A-port of the cabin elevation control valve 480 and the rod side of the cabin elevation cylinder 800 to each other. Accordingly, working fluid moves along the second cabin elevation line 682 and flows into the rod side of the cabin elevation cylinder 800.

When the working fluid flows into the rod side of the cabin elevation cylinder 800, the cabin elevation cylinder 800 contracts and moves down the cabin 700. In this process, working fluid is discharged to the head side of the cabin elevation cylinder 800 and the check valve in the lock valve 470 is opened.

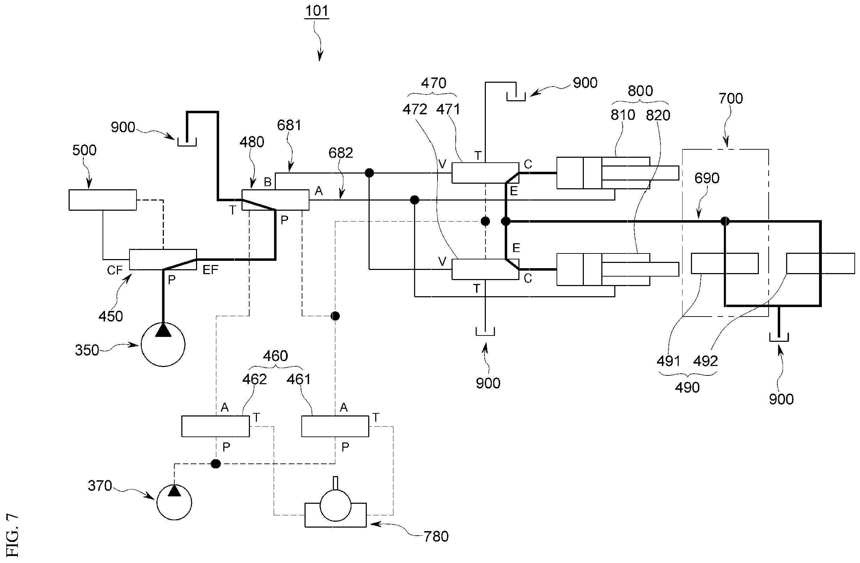

Next, an emergency-down operation is described with reference to FIG. 7.

As shown in FIG. 7, in order to move down the cabin 700, which has been moved up, in an emergency, the internal emergency-down valve 491 or the external emergency-down valve 492 is opened and working fluid is discharged from the head side of the cabin elevation cylinder 800, so the cabin 700 is moved down by its own weight. In this process, the C-port and the E-port of the lock valve 470 are connected to each other, so the working fluid discharged from the head side of the cabin elevation cylinder 800 passes through the lock valve 470 and the working fluid that has passed through the lock valve 470 is discharged to the oil tank 900 through the emergency-down valve 490.

A user in the cabin 700 can operate the internal emergency-down valve 491 in an emergency. Further, when a user in the cabin 700 cannot operate the internal emergency-down valve 491 in an emergency, a worker can move down the cabin 900 by operating the external emergency-down valve 492.

If the steering pump 350 keeps operating in emergency, the P-port and the T-port of the cabin elevation control valve 480 are connected to each other and the working fluid discharged from the steering pump 350 can be discharged to the oil tank 900 through the cabin elevation control valve 480.

As described above, the construction machinery 700 according to an embodiment of the present disclosure not only can stably and efficiently move up the cabin 700 in which a user sit, but can safely move down the cabin 700, which has been moved up, even in an emergency.

Although an exemplary embodiment of the present disclosure was described above with reference to the accompanying drawings, those skilled in the art would understand that the present disclosure may be implemented in various ways without changing the necessary features or the spirit of the prevent disclosure.

Therefore, it should be understood that the embodiment described above is not limitative, but only an example in all respects, the scope of the present disclosure is expressed by claims described below, not the detailed description, and it should be construed that all of changes and modifications achieved from the meanings and scope of claims and equivalent concept are included in the scope of the present disclosure.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. Construction machinery comprising:
a cabin (700) in which a user sits;
a cabin elevation cylinder (800) connected to a body of the construction machinery and moving up and down the cabin (700);
a steering system (500) changing a traveling direction when being operated by a user;
a steering pump (350) discharging working fluid;
a steering priority valve (450) supplying working fluid discharged by the steering pump (350) to the steering system (500) or the cabin elevation cylinder (800);
a cabin elevation control valve (480) controlling an up-operation or a down-operation of the cabin elevation cylinder (800) by changing a movement direction of working fluid that is supplied to the cabin elevation cylinder (800) by the steering priority valve (450);
a solenoid valve (460) controlling operation of the cabin elevation control valve (480); and
a cabin elevation operation device (780) transmitting a cabin elevation operation signal to the solenoid valve (460).

2. The construction machinery of claim 1, further comprising an oil tank (900) connected with the cabin elevation control valve (480).

3. The construction machinery of claim 1, wherein the steering priority valve (450) is configured to supply working fluid in priority to the steering system (500) when the steering system (500) is operated by a user.

4. The construction machinery of claim 1, further comprising:
a first cabin elevation line (681) connecting the cabin elevation control valve (480) and a head side of the cabin elevation cylinder (800) to each other;
a second cabin elevation line (682) connecting the cabin elevation control valve (480) and a rod side of the cabin elevation cylinder (800) to each other; and
a lock valve (470) installed on the first cabin elevation line (681).

5. The construction machinery of claim 4, further comprising:
an oil tank (900) keeping working fluid;
a drain line (690) connecting the lock valve (470) and the oil tank (900) to each other; and
an emergency-down valve (490) installed on the drain line (690).

6. The construction machinery of claim 5, wherein the emergency-down valve (490) includes:
an internal emergency-down valve (491) disposed inside the cabin (700); and
an external emergency-down valve (492) disposed outside the cabin (700).

7. The construction machinery of claim 1, wherein the steering system (500) includes:
a steering cylinder (550) operated by working fluid supplied through the steering priority valve (450), and having a first pressure receiver (551) and a second pressure receiver (552);
a steering control valve (570) disposed between the steering cylinder (550) and the steering priority valve (450) and selectively supplying working fluid to one of the first pressure receiver (551) and the second pressure receiver (552) of the steering cylinder (550);
a steering operation device (530) generating a steering operation signal when being operated by a user; and
a steering motor (520) switching the steering control valve (570) in response to a steering operation signal from the steering operation device (530).

8. The construction machinery of claim 7, wherein the steering priority valve (450) is configured to send working fluid toward the cabin elevation control valve (480) when the steering operation device (530) is not operated.
